# EUROPEAN PATENT APPLICATION

(11) **EP 2 642 565 A1**
(43) Date of publication of application: **25.09.2013**
(21) Application number: 12191736.3
(22) Date of filing: 08.11.2012
(51) Int. Cl.: H01M 4/505, H01M 4/525, C01G 45/12, C01G 51/00, C01G 53/00

(54) **Positive electrode active material for a lithium ion secondary battery, method of preparing and lithium ion secondary battery including the same**

(30) Priority: 22.03.2012 KR 20120029509
(71) Applicant: Samsung Corning Precision Materials Co., Ltd., Gyeongsangbuk-do 730-725 (KR)
(72) Inventor: Lee, Mi Sun, 336-841 Asan-si (KR); Yun, Pil Sang, 336-841 Asan-si (KR); Lee, Doo Kyun, 336-841 Asan-si (KR); Choi, Shin Jung, 336-841 Asan-si (KR); Cho, Yun Ju, 336-841 Asan-si (KR)
(74) Representative: Gulde Hengelhaupt Ziebig & Schneider

(57) **Abstract**

The present invention relates to a positive electrode active material for a lithium ion secondary battery expressed by the following Chemical Formula 1 and containing antimony:

yLi₂MnO₃-(1-y)LiM₍₁₋ₓ₎SbₓO₂ (1)

where M is one or more selected from the group consisting of nickel (Ni), cobalt (Co), and manganese (Mn), and 0<x<1 and 0<y<1.

## Description

The present invention relates to a positive electrode active material for a lithium ion secondary battery,a method of preparing the same, and a lithium ion secondary battery including the positive electrode active material, and more particularly, to a positive electrode active material able to inhibit an increase in impedance at high temperatures and improve lifetime characteristics by including antimony, a method of preparing the same, and a lithium ion secondary battery including the positive electrode active material.

### Description of the Related Art

Recently, in line with the requirements for miniaturization and lightness of portable electronic devices such as mobile phones, notebooks, and personal digital assistants (PDAs), improvements in characteristics, such as high capacity, long lifetime, and high safety, of lithium (Li) ion secondary batteries used as power sources of these electronic devices are required. Also, interests in automotive electrification have grown and a lithium ion secondary batteryas a power source of electric vehicleshas emerged as a powerful alternative.

Since LiNiCoMnO₂ oxide, an industrially most used as a positive electrode active material of lithium ion secondary batteries, is relatively environmentally friendly and less expensive than LiCoO₂and has higher capacity than LiMn₂O₄, LiNiCoMnO₂ oxide has received attention in the fields requiring a battery having high power and high energy density, such as mobile phones and electric vehicles.

A positive electrode active material having recently received attentionis a solid solution material having a composition of Li₂MnO₃-LiMO₂ (M is nickel (Ni), cobalt (Co), or manganese (Mn)) which may exhibit higher capacity than that of a typical positive electrode and may be used at a high voltage, and thus, a lithium ion secondary battery having high energy density may be prepared.

However, since a layer-structured positive electrode active material basically is structurally unstable after the extraction of lithium ions and the lifetime thereof may rapidly decrease due to an increase in resistance (impedance) during charge and discharge at high temperatures, the layer-structured positive electrode active material may be difficult to be employed in electric vehicles.

### Summary of Invention

The present invention providesa positive electrode active material improving lifetime characteristics during charge and discharge at high temperatures and inhibiting an increase in impedance.

The present invention further provides a method of preparing the foregoing positive electrode active material and a lithium ion secondary battery using the positive electrode active material.

According to the present invention there is provideda positive electrode active material for a lithium ion secondary battery expressed by the following Chemical Formula 1 and containing antimony,

yLi₂MnO₃-(1-y)LiM₍₁₋ₓ₎SbₓO₂ (1)

where M is one or more selected from the group consisting of nickel (Ni), cobalt (Co), and manganese (Mn), and 0<x<1 and 0<y<1.

A content of antimony may be in a range of 0.1 mol% to 2 mol% based on the entire positive electrode active material.

According to another embodiment, a method of preparing the positive electrode active material for a lithium ion secondary battery of the present disclosure includes diluting an antimony-containing compound with alcohol, adding yLi₂MnO₃-(1-y)LiMO₂ (where M is one or more selected from the group consisting of nickel (Ni), cobalt (Co), and manganese (Mn), and 0<y<1) to the obtained diluted antimony-containing compound solution and then stirring, heating the solution after completion of the stirring to evaporate alcohol, and performing a heat treatment.

Theantimony-containing compound may be antimony oxide.

yLi₂MnO₃-(1-y)LiMO₂ may be added to allow a content of antimony to be included in a range of 0.1 mol% to 2 mol%.

The heat treatment may be performed at a temperature in a range of 500°C to 750°C for 3 hours to 10 hours.

According to another embodiment, a lithium ion secondary battery includes the positive electrode including the positive electrode active material of the present disclosure, an electrolyte, and a negative electrode.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

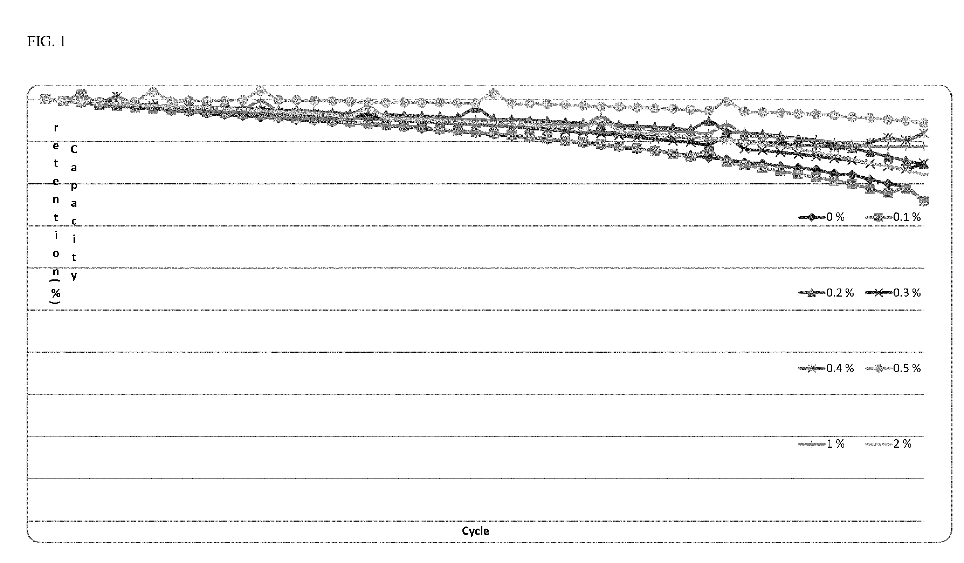

FIG. 1 is a graph comparing high-temperature lifetime characteristics of positive electrode active materials according to the present disclosure.

### Detailed Description

The present invention relates to a positive electrode active material for a lithium ion secondary battery expressed by the following Chemical Formula 1 and containing antimony.

yLi₂MnO₃-(1-y)LiM₍₁₋ₓ₎SbₓO₂ (1)

where M is one or more selected from the group consisting of nickel (Ni), cobalt (Co), and manganese (Mn), and 0<x<1 and 0<y<1.

Li₂MnO₃-LiMO₂ (where M is one or more selected from the group consisting of Ni, Co, and Mn), as a layer-structured positive electrode active material used in a lithium ion secondary battery, is a solid solution material, a mixture of a layer-type LiMO₂ positive electrode active material and Li₂MnO₃.

In the layer-type LiMO₂ positive electrode active material, two MO₂ layers exist in a single crystal structure and lithium ions exist between each MO₂ layer. The layer-type positive electrode active material has a limitation in that electrode capacity may decrease because the structure thereof may be changed according to the extraction of lithium ions.

Li₂MnO₃ is used for stabilizing the foregoing layer structure. Since Mn in Li₂MnO₃ exists as a stable tetravalent cation and has a high activation barrier for diffusion, Mn contributes to stabilize the layer structure.

The present invention provides a positive electrode active material expressed by Chemical Formula 1 in which a portion of M sites in the Li₂MnO₃-LiMO₂ positive electrode active material is substituted with antimony. Since antimony is included in the positive electrode active material, an increase in impedance may be inhibited and the lifetime characteristics of a battery may be improved.

A content of antimony may be in a range of 0.1 mol% to 2 mol% based on the entire positive electrode active material. In the case that the content of antimony is within the foregoing range, an increase in impedance may be inhibited and lifetime characteristics may be improved while existing capacity characteristics are not significantly decreased.

In the case that the content of antimony is greater than 2 mol%, a decrease in capacity may be significant, and in the case that the content of antimony is less than 0.1 mol%, characteristics may not be improved.

The positive electrode active material containing antimony of the present disclosure may be prepared by a method including diluting an antimony-containing compound with alcohol, adding yLi₂MnO₃-(1-y)LiMO₂ (where M is one or more selected from the group consisting of Ni, Co, and Mn) to the obtained diluted antimony-containing compound solution and then stirring, heating the solution after completion of the stirring to evaporate alcohol, and performing a heat treatment.

The antimony-containing compound may be oxide or hydroxide of antimony, and the oxide or hydroxide of antimony is diluted in alcohol, such as methanol, ethanol, and isopropyl alcohol, so as to be uniformly mixed.

Next, yLi₂MnO₃-(1-y)LiMO₂ is added to the diluted solution of the antimony-containing compound and then stirred. At this time, Li₂MnO₃-LiMO₂ may be added to allow the content of antimony in the entire compound to be included in a range of 0.1 mol% to 2 mol%.

The Li₂MnO₃-LiMO₂ may be prepared by using a solid method, in which a Li₂CO₃ or LiOH lithium salt is uniformly mixed with a M(OH)₂ precursor formed by coprecipitation by using a mixer, ball mill, or mortar for 10 minutes to 1 hour and a heat treatment is then performed at a temperature in a range of 800°C to 1000°C for 5 hours to 24 hours.

Alcohol is evaporated by heating the solution after the completion of the stirring at 120°C for 6 hours and then the positive electrode active material of the present disclosure may be prepared through a heat treatment. The heat treatment may be performed at a temperature in a range of 500°C to 750°C for 3 hours to 10 hours. The reason for this is that the temperature range is appropriate toincrease a binding force with respect to antimony while maintaining a size of particles.

The embodiment provides a lithium ion secondary battery including a positive electrode including the positive electrode active material of the present disclosure, a negative electrode, and an electrolyte.

An electrode used in a lithium ion secondary battery is typically prepared in such a manner that an active material, a binder, and a conductive agent are mixed with a solvent to form a slurry and an electrode collector is coated with the slurry,and the coated collector is then dried and pressed.

The electrode collector acts to collect electrons generated by electrochemical reactions of the active material or to supply electrons required for the electrochemical reactions. For example, a copper thin film may be used as a negative electrode collector of a lithium ion secondary battery and an aluminum thin film may be used as a positive electrode collector. In the lithium ion secondary battery of the present disclosure, natural graphite, artificial graphite, carbon fibers, cokes, carbon black, carbon nanotubes, fullerenes, active carbon, and lithium metal may be used as a negative electrode active material, but the present disclosure is not limited thereto.

Artificial graphite, natural graphite, Denka black, acetylene black, Ketjen black, channel black, lamp black, thermal black, conductive fibers such as carbon fibers or metal fibers, conductive metal oxides such as titanium oxide, and metal powders such as aluminum powder and nickel powder, may be used as the conductive agent, but the present disclosure is not limited thereto.

The binder functions to bond the active material and the conductive agent to be adhered to the electrode collector, and polyvinylidene fluoride, polypropylene, carboxymethyl cellulose, starch, hydroxypropyl cellulose, or polyvinylpyrrolidone may be used.

The electrolyte acts as a medium for transferring lithium ions in the positive electrode and the negative electrode, and an electrolyte having a lithium salt dissolved in an organic solvent may be used. Examples of the organic solvent may be ethylene carbonate, propylene carbonate, dimethyl carbonate, diethyl carbonate, methylpropyl carbonate, ethylpropyl carbonate, butylene carbonate, and acetonitrile, and the organic solvent may be used alone or in combination thereof. The lithium salt acts as a source of lithium ions and for example, a lithium salt typically used in an electrolyte of a lithium ion secondary battery, such as LiPF₆, LiBF₄, LiSbF₆, LiAsF₆, LiClO₄, LiN(C₂F₅SO₂)₂, LiN(CF₃SO₂)₂, CF₃SO₃Li, and LiC(CF₃SO₂)₃, may be used.

The lithium ion secondary battery of the present disclosure may prevent an electrical short circuit between two electrodes and may provide a path for transferring ions by including a separator between the positive electrode and the negative electrode. For example, polyethylene (PE) or polypropylene (PP) or a combination thereof may be used as a polyolefin-based separator.

The lithium ion secondary battery according to the embodiment may be prepared by a typical method well known in the art.

Hereinafter, the present disclosure will be described in more detail according to the following examples. However, the present disclosure is not limited thereto.

### Examples

### (Preparation Example)

As starting materials, NiSO₄, MnSO₄, and CoSO₄ were diluted in deionized (DI) water at a mole ratio of 0.478:0.163:0.359 and then precipitated in NaOH to prepare a Ni_{0.478}Co_{0.163}Mn_{0.359}(OH)₂ precursor.

A Li₂CO₃ salt was added to the precursor mixture and mixed by a mixer for 10 minutes. The mixture was heat treated at 920°C for 10 hours to prepare Li₂MnO₃-LiNiCoMnO₂ powder.

### (Example 1)

0.03 g of antimony oxide was diluted in 50 ml of isopropyl alcohol and then 9 g of Li₂MnO₃-LiNiCoMnO₂ obtained in the foregoing Preparation Example was added and stirred for 6 hours. Thereafter, the mixture was heated at 120°C for 6 hours to evaporate isopropyl alcohol and then heated at 600°C for 6 hours to synthesize a positive electrode active material surface treated with antimony. A content of transition metal among the powder was identified through inductively coupled plasma (ICP) analysis, and that a crystal structure of the powder was maintained was confirmed from (003), (101), (006), (102), (104), (106), (107), (108), and (110) characteristic peaks of a layer structure through X-ray diffraction (XRD) analysis. The positive electrode active material thus obtained, a Super-P conductive agent, and a polyvinylidene fluoride (PVDF) binder were mixed at a weight ratio of 94:3:3 in N-methyl-2-pyrrolidone (NMP) to form a slurry. The slurry was casted on a thin aluminum plate, and the thin aluminum plate was dried in a conventional oven at 100°C for 1 hour and in a vacuum oven at 120°C for 2 hours, and then pressed to prepare a positive electrode. A coin cell was prepared by using lithium metal as a negative electrode and a 1.3M LiPF₆ ethylene carbonate (EC)/dimethylene carbonate (DMC)/EC (=5:3:2) solution as an electrolyte.

### (Examples 2 to 7)

Coin cells were prepared in the same manner as Example 1 except that contents of antimony were respectively changed in a range of 0.2 mol% to 2 mol%.

### (Comparative Example)

Li₂MnO₃-LiNiCoMnO₂ as a positive electrode active material, a Super-P conductive agent, and a PVDF binder were mixed at a weight ratio of 94:3:3 in N-methyl-2-pyrrolidone (NMP) to form a slurry. The slurry was casted on a thin aluminum plate and the thin aluminum plate was dried in a vacuum oven at 120°C, and then pressed to prepare a positive electrode. A coin cell was prepared by using lithium metal as a negative electrode and a 1.3M LiPF₆ EC/DMC/EC (=5:3:2) solution as an electrolyte.

### (Experimental Example)

The coin cells prepared in Examples and Comparative Example were subjected to one cycle of charge and discharge at 0.2 C at room temperature, and 50 cycles of charge and discharge at 1 C were then performed on the coil cells after heating to a temperature of 45°C and impedances thereof were measured.

After each coil cell was cooled to room temperature (25°C), in order to identify an increase in resistance after the high-temperature cycles, a state of charge was adjusted to 75% based on data obtained through the one cycle of charge and discharge performed at 0.2 C at room temperature and then resistance of the battery before the high-temperature cycles was measured by using an alternate current (AC) impedance method.

After the 50 cycles of charge and discharge at 45°C, each coin cell was fully discharged at 1 C in an impedance instrument and a state of charge was adjusted to 75% based on the data obtained at 0.2 C, and then impedance after the high-temperature cycles was measured.

The measurements were performed within a voltagewidth of 10 Mv and at a frequency ranging from 100 mHz to 100 kHz.

Impedance values were minimized by using a Z-fit tool.

Capacity retention ratios after the 50 cycles of charge and discharge performed at 1 C at 45°C are shown in FIG. 1 and changes in the impedance values are presented in Table 1.

**[Table 1]**

| | Comparative Example | Example 1 | Example 2 | Example 3 | Example 4 | Example 5 | Example 6 | Example 7 |
|---|---|---|---|---|---|---|---|---|
| Sbmol% | 0 | 0.1 | 0.2 | 0.3 | 0.4 | 0.5 | 1 | 2 |
| Impedance before high-temperature charge and discharge (Ω) | 0.91 | 0.89 | 0.86 | 0.83 | 0.77 | 0.79 | 0.88 | 0.95 |
| Impedance after high-temperature charge and discharge(Ω) | 1.88 | 1.80 | 1.62 | 1.33 | 1.10 | 0.95 | 1.65 | 1.89 |
| Increase factor | 2.06 | 2.02 | 1.88 | 1.60 | 1.43 | 1.20 | 1.88 | 1.99 |

Hence, the positive electrode active material containing antimony inhibits an increase in resistance (impedance) according to charge and discharge cycles at a high temperature and may greatly improve high-temperature lifetime characteristics.

## Claims

1. Apositive electrode active material for a lithium ion secondary battery expressed by the following Chemical Formula 1 and comprising antimony,
yLi₂MnO₃-(1-y)LiM₍₁₋ₓ₎SbₓO₂ (1)
where M is one or more selected from the group consisting of nickel (Ni), cobalt (Co), and manganese (Mn), and 0<x<1 and 0<y<1.

2. The positive electrode active material for a lithium ion secondary batteryof claim 1, wherein a content of antimony is in a range of 0.1 mol% to 2 mol% based on the entire positive electrode active material.

3. A method of preparing the positive electrode active material for a lithium ion secondary batteryaccording to claim 1 or 2, the method comprising the steps of:
diluting an antimony-containing compound with alcohol;
adding yLi₂MnO₃-(1-y)LiMO₂,where M is one or more selected from the group consisting of nickel (Ni), cobalt (Co), and manganese (Mn) and 0<y<1, to the obtained diluted antimony-containing compound solution and then stirring;
heating the solution after completion of the stirring to evaporate alcohol; and
performing a heat treatment.

4. The method of claim 3, where in the antimony-containing compound is antimony oxide.

5. The method of claim 3 or 4, whereinyLi₂MnO₃-(1-y)LiMO₂is added to allow a content of antimony to be included in a range of 0.1 mol% to 2 mol%.

6. The method of one of claims3 - 5, wherein the heat treatment is performed at a temperature in a range of 500°C to 750°C for 3 hours to 10 hours.

7. A positive electrode comprising the positive electrode active material of claim 1 or 2.

8. A lithium ion secondary battery comprising the positive electrodeof claim 7, an electrolyte, and a negative electrode.
